# EUROPÄISCHE PATENTSCHRIFT

(11) **EP 0 620 133 B1**
(45) Veröffentlichungstag und Bekanntmachung des Hinweises auf die Patenterteilung: **24.09.1997**
(21) Anmeldenummer: 94101601.6
(22) Anmeldetag: 03.02.1994
(51) Int. Cl.: B60H 3/06

(54) **Luftfilter für den Innenraum von Kraftfahrzeugen**
Air filter for the interior of a motor vehicle
Filtre à air pour l'habitacle d'un véhicule automobile

(30) Priorität: 16.04.1993 DE 9305767 U
(43) Veröffentlichungstag der Anmeldung: 19.10.1994
(73) Patentinhaber: FILTERWERK MANN & HUMMEL GMBH, D-71631 Ludwigsburg (DE)
(72) Erfinder: Andress, Heinz, D-71729 Erdmannhausen (DE); Mangold, Christof, D-70178 Stuttgart (DE); Klotz, Arthur, D-71686 Remseck (DE); Maurer, Hermann, D-71720 Oberstenfeld (DE)
(74) Vertreter: Voth, Gerhard, Dipl.-Ing.

(56) Entgegenhaltungen:
- EP-A- 0 549 474
- DE-A- 3 731 620
- DE-A- 4 140 965
- DE-C- 4 205 836
- DE-U- 8 808 009
- FR-A- 2 306 357
- FR-A- 2 586 203
- PATENT ABSTRACTS OF JAPAN vol. 5, no. 204 (C-85) (876) 24. Dezember 1981 & JP-A-56 124 420 (HITACHI) 30. September 1981

## Beschreibung

Die Erfindung betrifft ein Filter, insbesondere ein Luftfilter für den Innenraum von Kraftfahrzeugen.

Ein Luftfilter für Kraftfahrzeuge ist beispielsweise aus der DE-C-40 28 899 bekannt. Dieses besteht aus einer Halterung und einem abnehmbaren Abdeckteil. Zwischen Halterung und Abdeckteil befindet sich ein Filterelement. Die Halterung ist mit Steckverbindungen versehen. In diese Steckverbindungen wird das Abdeckteil eingesteckt. Gleichzeitig wird über Dichtflächen, die an der Halterung und dem Abdeckteil angeordnet sind, der Filtereinsatz zwischen den beiden Teilen eingespannt. Die Steckverbindung ist ein elastisch verformbares Element, welches eine kraftschlüssige Verbindung zwischen Halterung und Abdeckteil bewirkt.

Ein Nachteil dieser Einrichtung ist darin zu sehen, daß - beispielsweise durch Schwingungen - sich das Abdeckteil von der Halterung lösen kann und sich dadurch das Filtergehäuse ungewollt öffnet.

Es ist weiterhin aus dem DE-U-87 09 100 eine Filtereinrichtung bekannt, bei welcher ein Filtereinsatz an seinem Umfang mit Laschen versehen ist und diese Laschen in die Verbindungsstelle zwischen Filterdeckel und Filterboden eingespannt werden. Die Laschen sind mit geeigneten Dichtmitteln versehen, so daß gleichzeitig eine Dichtwicklung zwischen Gehäuseboden und Gehäusedeckel erzielt wird.
Ein Nachteil dieser Einrichtung besteht darin, daß die beiden Gehäuseteile miteinander verschraubt werden müssen.

Der Erfindung liegt die Aufgabe zugrunde, die genannten Nachteile zu vermeiden und ein Luftfilter zu schaffen, bei welchem der Filtereinsatz einfach austauschbar ist und das Gehäuse mit geringem Aufwand hergestellt werden kann.

Diese Aufgabe wird ausgehend von dem Oberbegriff des Hauptanspruchs durch dessen kennzeichnende Merkmale gelöst.

Ein Vorteil der Erfindung ist der einfache Aufbau. Ein Gehäusedeckel ist nicht mehr erforderlich, der Rohluftzutritt entspricht dem Querschnitt des Filtereinsatzes. Dadurch entstehen einfache Montagevoraussetzungen. Außerdem kann die Rohluft in das Filterelement ungehindert einströmen.

Durch Wegfall des Deckels ist natürlich eine zweckmäßige Befestigung des Filtereinsatzes erforderlich. Dies wird dadurch erzielt, daß Halter mit Filmscharnieren unmittelbar am Gehäuse befestigt sind und diese den Filtereinsatz in der Einbaulage fixieren.

Ferner wird vorgeschlagen, das Gehäuse aus einem thermoplastischen Kunststoff herzustellen. An dieses Gehäuse können die Halter mit ihren Filmschanieren unmittelbar angegossen sein. Damit besteht das Gehäuse einschließlich der Befestigungselemente aus einem einzigen Teil, wodurch erhebliche Montage- und Herstellkosten gespart werden.

Der Halter ist gemäß einer vorteilhaften Ausgestaltung mit wenigstens einer Rippe versehen. Diese Rippe übt bei eingebautem Filtereinsatz eine Kraft auf denselben aus, so daß eine sichere Befestigung des Filtereinsatzes in dem Gehäuse gewährleistet ist.
Gemäß einer weiteren Ausgestaltung des Filtereinsatzes besteht dieser aus einem zick-zack-förmig gefalteten Papier oder Vlies und ist mit einer umlaufenden PUR-Schaum-Dichtung versehen. Der Aufbau des Filtereinsatzes, bei dem keine Metallteile verwendet werden, ist damit entsorgungsfreundlich gestaltet, d. h. der Filtereinsatz ist problemlos thermisch zu entsorgen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungbeispiels näher erläutert. Es zeigt
- Figur 1: eine Draufsicht auf ein Luftfilter,
- Figur 2: eine Schnittdarstellung des Luftfilters gemäß Figur 1 entlang des Schnittes A - B.

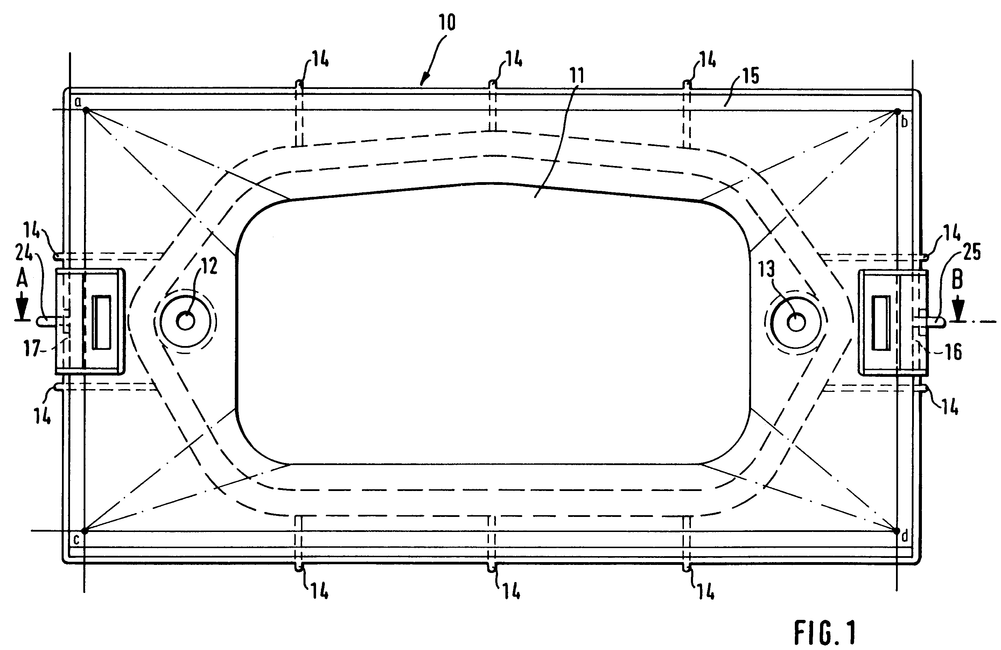

Das Luftfilter nach Figur 1 besteht aus einem Gehäuse 10 mit dem Reinluftauslaß 11 und den Bohrungen 12, 13 zum Befestigen des Gehäuses 10 an einem hier nicht dargestellten Frischluftkanal. An dem Gehäuse befinden sich mehrere am Umfang verteilt angeordnete Versteifungsrippen 14 und eine umlaufende Dichtauflage 15. An den beiden Schmalseiten des Gehäuses 10 sind Halter 16, 17 angeordnet. Zur besseren Darstellung des Gehäuses ist in dieser Figur kein Filtereinsatz eingezeichnet.

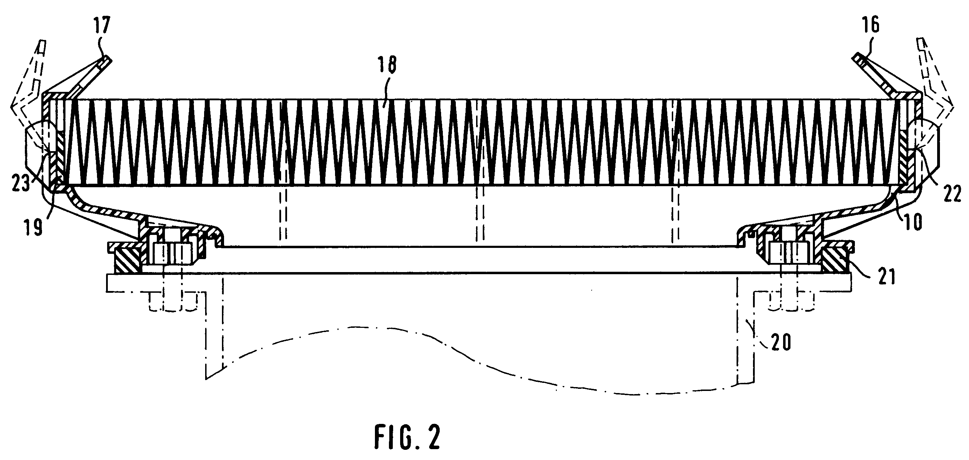

Figur 2 zeigt einen Schnitt längs der Schnittlinie A - B der Figur 1. In diesem Schnitt ist der Filtereinsatz 18 dargestellt. Dieser Filtereinsatz besteht aus einem zick-zack-förmig gefalteten Filtermedium, welches in Plattenbauweise hergestellt ist und eine umlaufende Dichtung 19 aufweist.

Das Gehäuse 10 ist an seiner dem Luftkanal 20 zugewandten Stirnfläche ebenfalls mit einer umlaufenden Dichtung 21 ausgestattet. Die Halter 16, 17 sind längs der Befestigungslinie, an der sie an dem Gehäuse 10 befestigt sind, über ein Filmscharnier 22, 23 mit dem Gehäuse verbunden und können zum Entfernen des Filtereinsatzes 18 in die gestrichelt gezeichnete Stellung geklappt werden. Der Filtereinsatz läßt sich anschließend problemlos herausnehmen und ein neuer Filtereinsatz einsetzen.

Das gesamte Luftfilter zeichnet sich durch eine hohe Wartungsfreundlichkeit aus, da kein Deckel oder ähnliches den Zugang zu dem Filtereinsatz 18 behindert. Außerdem kann der Filtereinsatz rohluftseitig durch eine optische Prüfung bezüglich seines Verschmutzungsgrads beurteilt werden, so daß aufwendige Anzeigevorrichtungen für die Beurteilung des Verschmutzungsgrads entfallen.

### Bezugszeichenliste

- 10: Gehäuse
- 11: Reinluftauslaß
- 12: Bohrung
- 13: Bohrung
- 14: Versteifungsrippen
- 15: Dichtauflage
- 16: Halter
- 17: Halter
- 18: Filtereinsatz
- 19: Dichtung
- 20: Luftkanal
- 21: Dichtung
- 22: Filmscharnier
- 23: Filmscharnier
- 24: Rippe
- 25: Rippe

## Patentansprüche

1. Luftfilter insbesondere für die Innenraumbelüftung von Kraftfahrzeugen, bestehend aus einem Gehäuse (10), welches mit einem Rohlufteinlaß und einem Reinluftauslaß versehen ist, einem in das Gehäuse (10) einsetzbaren, aus einem zick-zack-förmig gefalteten Filtermedium bestehenden Filtereinsatz (18), wobei dieser ein umlaufendes Dichtelement aufweist zum Abdichten des Reinluftbereichs, dadurch gekennzeichnet, daß der rohluftseitige Einlaß des Gehäuses (10) den Querschnitt des Filtereinsatzes (18) aufweist und an dem Gehäuse (10) über Filmscharniere (22, 23) Halter (16, 17) angeordnet sind, welche das Filterelement (18) in seiner Einbaulage fixieren, wobei das Gehäuse (10) aus thermoplastischem Kunststoff besteht und die Halter (16, 17) mit dem Gehäuse in einem Stück gefertigt sind.

2. Filter nach Anspruch 1, dadurch gekennzeichnet, daß die Halter (16, 17) jeweils wenigstens eine Rippe (24, 25) aufweisen, welche in Kontakt mit dem Filtereinsatz (18) steht.

3. Filter nach einem der vorhergehenden Ansprüche, dadurch gekennzeichnet, daß das Filterelement (18) ein Papier- oder Kunststoffvliesfilter ist und dessen umlaufende Dichtung aus PUR-Schaum auf Polyesterbasis besteht.

## Claims

1. Air filter, more especially for the interior ventilation of automotive vehicles, comprising a housing (10), which is provided with an unfiltered air inlet and a filtered air outlet, and a filter element (18), which is insertable into the housing (10) and comprises a zigzag-folded filter medium, said element having a circumferential sealing element to seal the filtered air region, characterised in that the inlet of the housing (10) at the unfiltered air end has the cross-section of the filter element (18), and holders (16, 17) are disposed on the housing (10) via film hinges (22, 23), which holders secure the filter element (18) in its installation position, the housing (10) being formed from thermoplastic plastics material, and the holders (16, 17) being integrally produced with the housing.

2. Filter according to claim 1, characterised in that the holders (16, 17) each have at least one rib (24, 25), which is in contact with the filter element (18).

3. Filter according to one of the preceding claims, characterised in that the filter element (18) is a paper or plastics material web filter, and its circumferential seal is formed from expanded polyurethane based on polyester.

## Revendications

1. Filtre à air destiné en particulier à la ventilation de l'habitacle d'un véhicule automobile, constitué d'un boîtier (10) disposant d'une entrée d'air brut et d'une sortie d'air purifié, et dans lequel peut être logé un élément filtrant (18) fait d'une matière filtrante placé en accordéon et garni d'un joint périphérique assurant l'étanchéité de la zone d'air purifié,
caractérisé en ce que
l'entrée par laquelle l'air brut pénètre dans le boîtier (10) a une section correspondant à celle de l'élément filtrant (18), des organes de maintien (16, 17) en forme de charnières pelliculaires (22, 23) étant prévus sur le boîtier (10) pour fixer l'élément filtrant (18) dans sa position de montage, tandis que le boîtier (10), en matière thermoplastique, est réalisé d'une seule pièce incluant également les supports (16, 17).

2. Filtre selon la revendication 1,
caractérisé en ce que
les organes de maintien (16, 17) comportent chacun au moins une nervure (24, 25) qui est en contact avec l'élément filtrant (18).

3. Filtre selon une des revendications précédentes,
caractérisé en ce que
l'élément filtrant (18) est un filtre en papier ou en voile plastique dont le joint périphérique d'étanchéité est en mousse de polyuréthanne montée sur une base en polyester.
